# EUROPEAN PATENT APPLICATION

(11) **EP 1 441 021 A2**
(43) Date of publication of application: **28.07.2004**
(21) Application number: 02794844.7
(22) Date of filing: 16.08.2002
(51) Int. Cl.: C09K 21/02

(54) **COMPOSITIONS FOR FIRE-RESISTANT COATING, FIRE EXTINGUISHING AND FIRE PROTECTING**

(30) Priority: 21.08.2001 UA 01085855; 02.08.2002 UA 02086467; 02.08.2002 UA 02086468
(71) Applicant: Chistov, Alexei Semenovich, Odessa, 65104 (UA); Grygoryan, Eros Movsesovich, Odessa 65104 (UA); Arutyunian, Kerob Lendrushovich, Odessa 65058 (UA)
(72) Inventor: Chistov, Alexei Semenovich, Odessa, 65104 (UA); Grygoryan, Eros Movsesovich, Odessa 65104 (UA); Arutyunian, Kerob Lendrushovich, Odessa 65058 (UA)
(74) Representative: Benatov, Emil Gabriel, Dr.
(86) International application number: PCT/UA2002/000034
(87) International publication number: WO 2003/015873

(57) **Abstract**

The invention relates to the production of composition for fire-resistant coatings, fire extinguishing and fire protection. The properties of the inventive compositions make it possible to use them as fire-resistant coatings which reliably protect various surfaces against flames. Said compositions provide decorative properties of protected surfaces. The properties of said fire-extinguishing compositions make it possible to use said compositions against fires of various types and intensities: 1) ecological extinguishing of forest and steppe fires and protecting surrounding territories against fire development, minimally effecting the environment; 2) fire extinguishing of residential and industrial buildings and forming fire break areas. The inventive fire protecting means are devoid of toxic substances and can be used for extinguishing fires of various types and intensities and for preventing fire hazards.

## Description

### Field of the Invention

This invention relates to production of flame-retardant agents and can be used to protect materials from flame, to extinguish fire, to arrange a fire barrier at industrial and residential facilities and to extinguish fire and arrange fire barriers during forest fires.

### Prior art

The use of composition for making a flame-retardant coating that includes liquid glass and an additive, which is a mixture of dolomite and diatomite with the following weight percentage ratio of the components: dolomite and diatomite mixture - (30 ÷ 45) and liquid glass - (55 ÷ 70), (see Application of the Russian Federation No.95113611/03, C04B28/24, 1995).

This composition coincides with the composition, applied for in this invention in that it comprises the following general features:
- use of liquid glass;
- use of a filler of mineral origin.

However, the fire-retardant coating, obtained with the use of this composition, does not possess properties, that ensuring a long-term protection of wood against ignition.

The composition most close to those, known to the applicants, is the composition for flame-retardant coatings (see Application of the Russian Federation No.99120660/03, M. cl. C04B28/26, 1999). This composition comprises liquid sodium glass of 1.24 ÷ 1.26 g/cm³ density with 2.6 ÷ 3.2 module, modified with vinylidenbutadienchloride latex in the weight percentage ratio, respectively, (97 ÷ 99) : (1 ÷ 3), a bivalent metal carbonate and white Portland cement in the following weight percentage ratio of the components: liquid sodium glass of 1.24 ÷ 1.26 g/cm³ density with 2.6 ÷ 3.2 module, modified with vinylidenbutadienchloride latex with the weight percentage ratio, respectively, (97 ÷ 99) : (1 ÷ 3) - (60.0 ÷ 70.0), a bivalent metal carbonate (23 ÷ 31.0), diatomite (2.5 ÷ 4.0), white Portland cement (1.0 ÷ 1.5) and a pigment, making for the balance.

This composition has been chosen as the prototype of the composition for the flame-retardant coating.

The prototype coincides with the invention in that, it comprises the following general features:
- liquid glass;
- a bivalent metal carbonate;
- an additive of the material, bearing mineral origin;
- a colouring pigment.

However, a flame-retardant coating, obtained in the prototype, produces an insufficient fire-retardant effect and, as a consequence, has worse protective properties.

An agent for fire-extinguishing is known (see SU, A, 626780, A62 01/10, 1978), that is a suspense, containing clay, sand and water as a dispersion medium in the following weight percentage ratio of components:
- sand - 5 - 20;
- clay - 1 - 5;
- water - balance.

However, application of this composition for fire control does not produce the technical results according to the applied invention, because of the following reasons:
- inadequate adhesive and insulating properties with respect of the protected surface which does not allow for a reliable holding of water on it and insulating of the burning surface;
- lack of the component that facilitates dispersion of the composition above the burning surface.

### Disclosure of the Invention

This invention claims, principally, the compositions for flame-retardant coatings, fire extinguishing and fire barriers wherein the introduced new components as well as the change in the quantitative composition of the known components was provided for improvement of the fire-retardant, decorative, fire-extinguishing and fire barrier properties.

This task is achieved in a group of inventions, that are joined by a single inventive design, namely by a group of compositions, three of which are the compositions for flame-retardant coating and four of which are the compositions for fire-extinguishing and fire barrier.

The task is achieved in the first composition for flame-retardant coatings, containing was liquid glass, a bivalent metal carbonate, a mineral additive and a pigment, through an additional inclusion of the neutralysate of acid hydrolysis of the clay aluminum silicate and a mineral additive, represented by a clay aluminum silicate, the weight percentage ratio of the said components being:
- neutralysate of the acid hydrolysis of clay aluminum silicate 30.0÷42.0
- liquid glass 26.0÷45.0
- pigment 0.5÷1.0
- bivalent metal carbonate and/or clay aluminum silicate balance.

The task is achieved in the second composition for flame-retardant coatings, containing the neutralysate of acid hydrolysis of the clay aluminum silicate and liquid glass through the following weight percentage ratio of the neutralysate of acid hydrolysis of the clay aluminum silicate and liquid glass:
- neutralysate of the acid hydrolysis of clay aluminum silicate 30.0÷47.0
- liquid glass 53.0÷70.0

The task is achieved in the third composition for flame-retardant coatings, containing the neutralysate of acid hydrolysis of the clay aluminum silicate, liquid glass and a pigment, through the following weight percentage ratio of the neutralysate of acid hydrolysis of the clay aluminum silicate, liquid glass and a pigment:
- neutralysate of the acid hydrolysis of clay aluminum silicate 30.0÷45.0
- liquid glass 53.0÷68.0
- pigment 0.01÷2.0

The task is achieved in the fourth composition for fire extinguishing and fire barriers containing the neutralysate of acid hydrolysis of the clay aluminum silicate, a bivalent metal carbonate and/or clay aluminum silicate, liquid glass and a pigment, through additional inclusion of a detergent and water, the weight percentage ratio of the said components being :
- neutralysate of the acid hydrolysis of clay aluminum silicate 10.0÷31.5
- liquid glass 8.5÷33.5
- pigment 0.5÷1.5
- bivalent metal carbonate and/or clay aluminum silicate 4.0÷15.0
- detergent 0.2÷3.0
- water balance.

The task is achieved in the fifth composition for fire extinguishing and fire barriers containing the neutralysate of acid hydrolysis of the clay aluminum silicate, liquid glass and a pigment, through additional inclusion of a detergent and water, the weight percentage ratio of the said components being:
- neutralysate of the acid hydrolysis of clay aluminum silicate 10.0÷30.5
- liquid glass 30.5÷67.0
- pigment 0.5÷1.5
- detergent 0.01÷3.0
- water balance.

The task is achieved in the sixth composition for fire extinguishing and fire barriers, containing the neutralysate of acid hydrolysis of the clay aluminum silicate and a pigment through additional inclusion of the sodium salt of carboxymethylcellulose, a detergent and water, the weight percentage ratio of the said components being:
- neutralysate of the acid hydrolysis of clay aluminum silicate 30.0÷94.0
- pigment 0.5÷1.5
- sodium salt of carboxymethylcellulose 5.0÷17.0
- detergent 0.01÷3.0
- water balance.

The task is achieved in the seventh composition for fire extinguishing and fire barriers, containing the neutralysate of acid hydrolysis of the clay aluminum silicate and a pigment through additional inclusion of the sodium salt of carboxymethylcellulose and water, the following weight percentage ratio of the said components being:
- neutralysate of the acid hydrolysis of clay aluminum silicate 30.0÷94.0
- pigment 0.5÷1.5
- sodium salt of carboxymethylcellulose 5.0÷17.0
- water balance.

Properties of the proposed fire-retardant compositions allows the usage of them as flame-retardant coatings, reliably protecting various surfaces from ignition. Application of compositions 2 and 3 assures, as well, the preservation of the decorative properties of the protected surfaces.

Properties of the proposed fire extinguishing compositions allows the usage of them in fires of various types and intensity:
- ecologically safe extinguishing of forest and steppe fires and fire protection of adjacent areas at minimum environmental deterioration;
- fire extinguishing in residential and industrial buildings and establishment of fire-protected zones, that preclude fire spread.

Causal connection between the applied for set of features and the technical result of the invention can be described as follows:

The neutralysate of acid hydrolysis of the clay aluminum silicate contains substances, that possess fire-retardant properties and, therefore, improve flame-retardant properties both of coatings, obtained with the use of the applied compositions and of the fire-extinguishing and fire barrier agents.

Liquid glass is characterized by its high adhesion, that holds a flame-retardant or fire-extinguishing composition on the protected surface and prevents access of oxygen to the combustion zone and heat exchange with the ambient medium at high temperature. Detergents and the sodium salt of carboxymethylcellulose improve the composition dispersion efficiency above the ignition zone and adhesive properties.

If a bivalent metal carbonate and a mineral additive are not included in the composition, the decorative properties of the resulting flame-retardant coating are improved due to reduced composition of solid particles, that absorb and dissipate light.

High water content and addition of a detergent change physical and chemical properties of composition 1 and, consequently, impart fire-extinguishing properties to it.

If a bivalent metal carbonate and a mineral additive are not included in composition 1, the weight ratio of the other components is changed simultaneously and a detergent is added, it leads to better dispersion of fire-extinguishing composition 5 during fire extinguishing.

Fire-extinguishing compositions 6 and 7 are the most convenient for manufacturing, while preserving high fire-extinguishing efficiency due to properties of the neutralysate of acid hydrolysis of clay aluminum silicate, therefore composition 7 is more safe from the ecological viewpoint.

The ratios of the components in compositions have been selected in the course of experiments. Reduction of the neutralysate of acid hydrolysis of clay aluminum silicate leads to worsening of flame-retardant and fire-protection properties as well as it necessitates a higher content of liquid glass in the compositions.

Reduction of the liquid glass content also results in worsening of the flame-retardant properties of coatings and fire-extinguishing properties of fire-fighting agents, however, it is not advisable to increase its content in the compositions.

Reduction of a detergent content makes it difficult to disperse the fire-extinguishing agent, while an excessive content of a detergent in the composition prevents a supply of the agent to the ignited surface.

Reduction of the sodium salt of carboxymethylcellulose makes it difficult for the composition to adhere on the surface to be protected and diminishes its water-absorbing properties. Excessive increase of the sodium salt of carboxymethylcellulose content leads to an excessive increase of the composition's viscosity.

### Possible Embodiments of the Invention

The proposed compositions are prepared as follows:
Clay aluminum silicate is subjected to acid hydrolysis in compliance with TU 6-12-86-75. The obtained hydrolysate is neutralized with the agents of the group: MOH, MHCO₃, M₂CO₃, where M are belonging to group of Na, K, NH₄ - to pH = 4.0 - 14.0.

### Composition 1

A pigment, liquid glass, a bivalent metal carbonate and/or clay aluminum silicate are added in sequence, while mixing, to the neutralysate of the acid hydrolysis product of aluminum silicate, that has been obtained with the usage of an alkali metal hydroxide (neutralizing agent), in the following weight percentage quantities:
- neutralysate of the acid hydrolysis product of clay aluminum silicate (pH≥7.0) 30.4÷42.0
- pigment 0.50÷1.0
- liquid glass 26.0÷45.0
- bivalent metal carbonate and/or clay aluminum silicate balance.

### Composition 2

Liquid glass and a pigment are added to the neutralysate of the acid hydrolysis product of aluminum silicate, that has been obtained with the use of an alkali metal hydroxide, in accordance with its above mentioned content in the fire-extinguishing agent:
- neutralysate of the acid hydrolysis product of clay aluminum silicate (pH> 11.0) 30.0÷47.0
- liquid 53.0÷70.0
and mixed until a homogeneous suspension is obtained.

### Composition 3

Liquid glass and a pigment are added to the neutralysate of the acid hydrolysis product of aluminum silicate, that has been obtained with the use of an alkali metal hydroxide, in accordance with its mentioned above indicated content in the fire-extinguishing agent:
- neutralysate of the acid hydrolysis product of clay aluminum silicate (pH>11.0) 30.0÷45.0
- liquid glass 53.0÷68.0
- pigment 0.01÷2.0
and mixed until a homogeneous suspension is obtained.

### Composition 4

The components in accordance with their above mentioned contents in the fire-extinguishing agent are added to the neutralysate of the acid hydrolysis product of aluminum silicate while mixing, and subsequently a detergent is added in accordance with its above indicated content in the fire-retardant composition:
- neutralysate of the acid hydrolysis product of clay aluminum silicate (pH> 11.0) 10.0÷31.5
- liquid glass 8.5÷33.5
- pigment 0.5÷1.5
- bivalent metal carbonate and/or clay aluminum silicate 4.0÷15.0
- detergent 0.2÷3.0
- water balance.
and mixed until a homogeneous suspension is obtained.

### Composition 5

Liquid glass and a pigment are added to the neutralysate of the acid hydrolysis product of aluminum silicate and thoroughly mixed until a homogeneous suspension is obtained, afterwards a detergent is added in accordance with its above mentioned content in the fire-extinguishing composition:
- neutralysate of the acid hydrolysis product of clay aluminum silicate (pH>11.0) 10.0÷30.5
- liquid glass 30.5÷67.0
- pigment 0.5÷1.5
- detergent 0.01÷3.0
- water balance.
and mixed again.

### Composition 6

Carboxymethylcellulose and a detergent are added to the neutralysate of the acid hydrolysis product of aluminum silicate (pH=4.0÷8.0) in accordance with their above mentioned contents in the fire-retardant composition:
- neutralysate of the acid hydrolysis product of clay aluminum silicate (pH=4.0-8.0) 30.0÷94.0
- carboxymethylcellulose 5.0÷17.0
- detergent 0.01÷3.0
- pigment 0.5÷1.5
- water balance.
and mixed thoroughly until a homogeneous suspension is obtained.

### Composition 7

Carboxymethylcellulose is added to the neutralysate of the acid hydrolysis product of aluminum silicate (pH=4.0÷8.0) in accordance with its above mantioned content in the fire-retardant composition:
- neutralysate of the acid hydrolysis product of clay aluminum silicate (pH=4.0-.0) 30.0÷94.0
- carboxymethylcellulose 5.0÷17.0
- a pigment 0.5÷1.5
- water balance.
and mixed thoroughly until a homogeneous suspension is obtained.

Fire-protection efficiency of coatings obtained with the use of the applied for compositions has been determined in compliance with DSTU 16363-98 wherein a reduction of the wood weight covered with a flame-retardant coating is measured under a certain flame action (weight percentage).

Light transparency of 0.30 mm thick flame-retardant coating samples backed by quartz glass substrate has been determined with the aid of KFK-3 photocolorimeter.

The fire-extinguishing efficiency of the proposed fire-extinguishing compositions has been determined in compliance with DSTU 3675-98.

The fire-barrier efficiency of the applied compositions, has been determined in compliance with COST 16363-98.

### Example 1

The composition of the flame-retardant coating has been obtained as it was described above, the weight percentage ratio of the components being:
- neutralysate (pH=11.0) of the acid hydrolysis product of Odessa clay 42.0
- pigment 1.0
- liquid glass 30.0
- calcium carbonate and kaolinite with weight ratio 1 : 1 27.0

Two layers of the composition were applied on the sample surface with a 5 hour interval between applications and a 7-8 hour interval before the coating was finished.

A loss of the sample weight in the course of the test was 2% according to GOST 16363-98.

### Example 2

The composition of the flame-retardant agent has been obtained as it was described above, the weight percentage ratio of the components being:
- neutralysate of the acid hydrolysis product of clay aluminum silicate (pH=12.0) 36.0
- liquid glass 64.0

The composition was applied on the sample surface at a 5 hour interval between applications.

A loss of the sample weight in the course of the test was 3% according to GOST 16363-98 and the light transparency was 55%.

### Example 3

The composition of the flame-retardant agent has been obtained as it was described above, the weight percentage ratio being:
- clay aluminum silicate (pH=12.0) 36.0
- liquid glass 63.0
- pigment 1.0

The composition was applied on the sample surface at a 5 hour interval between applications.

A loss of the sample weight in the course of the test was 3% according to GOST 16363-98 and the light transparency was 20%.

### Example 4

The composition has been obtained, as it was described above with the usage of sodium hydroxide as a neutralizing agent, the weight percentage ratio being:
- neutralysate of the acid hydrolysis product of clay aluminum silicate (pH=12.0) 21.0
- liquid glass 23.0
- pigment (Fe₂O₃) 0.5
- kaolinite and CaCO₃ (1 : 1) 10.0
- detergent (OP-10) 1.0
- water balance.

The composition was used for extinguishing a simulated class 1A fire source in compliance with DSTU 3675-98. The simulated fire source was extinguished.

### Example 5

The composition has been obtained, as it was described above, with the usage of potassium hydroxide as a neutralizing agent, the weight percentage ratio being:
- neutralysate of the acid hydrolysis product of clay aluminum silicate (pH=12.5) 21.0
- liquid glass 48.0
- pigment (Fe₂O₃) 1.0
- detergent (OP-10) 1.0
- water balance.

The composition was used for extinguishing a simulated class 1A fire source in compliance with DSTU 3675-98. The simulated fire source was extinguished.

### Example 6

The composition has been obtained, as it was described above, with the usage of sodium carbonate as a neutralizing agent, the weight percentage ratio being:
- neutralysate of the acid hydrolysis product of clay aluminum silicate (pH=8.0) 47.0
- carboxymethylcellulose 9.0
- pigment (Fe₂O₃) 1.0
- detergent (OP-10) 0.5
- water balance.

The composition was used for extinguishing a simulated class 1A fire source in compliance with DSTU 3675-98. The simulated fire source was extinguished.

### Example 7

The composition has been obtained, as it was described above, with the usage of ammonia as a neutralizing agent, the weight percentage ratio being:
- neutralysate of the acid hydrolysis product of clay aluminum silicate (pH=6.5) 47.0
- carboxymethylcellulose 8.0
- pigment (Fe₂O₃) 1.0
- water balance.

The composition was used for extinguishing a simulated class 1A fire source in compliance with DSTU 3675-98. The simulated fire source was extinguished.

Averaged results of the determinations of light transparency and flame-retardant efficiency of samples, coated with compositions 1-3, are shown in Table 1.

The results of the study of the fire-extinguishing and fire barrier efficiency of compositions 4-7 are shown in Tables 2 and 3.

As it shown in Table 1, the reduction of the quantity of neutralysate of the clay aluminum silicate acid hydrolysis product leads to inferior flame-retardant properties of coatings and requires a higher content of liquid glass in the composition.

Reduction of the liquid glass content also leads to worse flame-retardant properties of coatings, however, it is not advisable to increase its content.

The coatings with improved decorative properties possess a light transparency within the applied range of the contents of components, but a reduction of the liquid glass content in their composition leads to worse flame-retardant properties. It follows from the data of the Table 2, that a reduction of the content of components below the applied for content levels, results in a loss of the flame-retardant efficiency of the compositions for all kinds of the proposed flame-retardant compositions.

Excessive amounts of the components in the fire-extinguishing compositions will also lead to a loss of their fire-extinguishing efficiency.

The data, contained in Table 3, proves, that more concentrated mixtures of components should be used for fire barriers.

### Industrial Application of the Invention

The proposed fire-fighting agents, provided no toxic substances, are included in their compositions, can be used for direct extinguishing of fires of various kinds and intensity as well as for fire prevention.

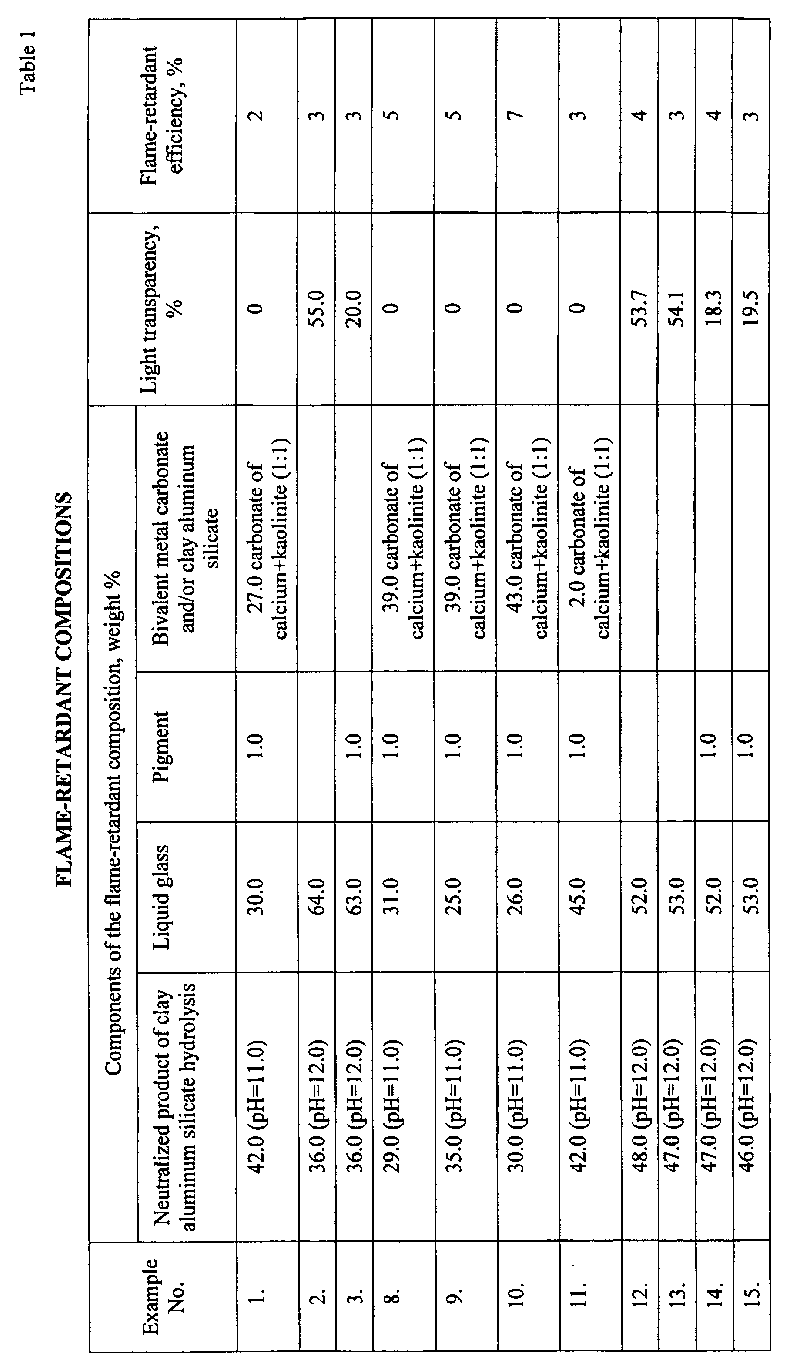

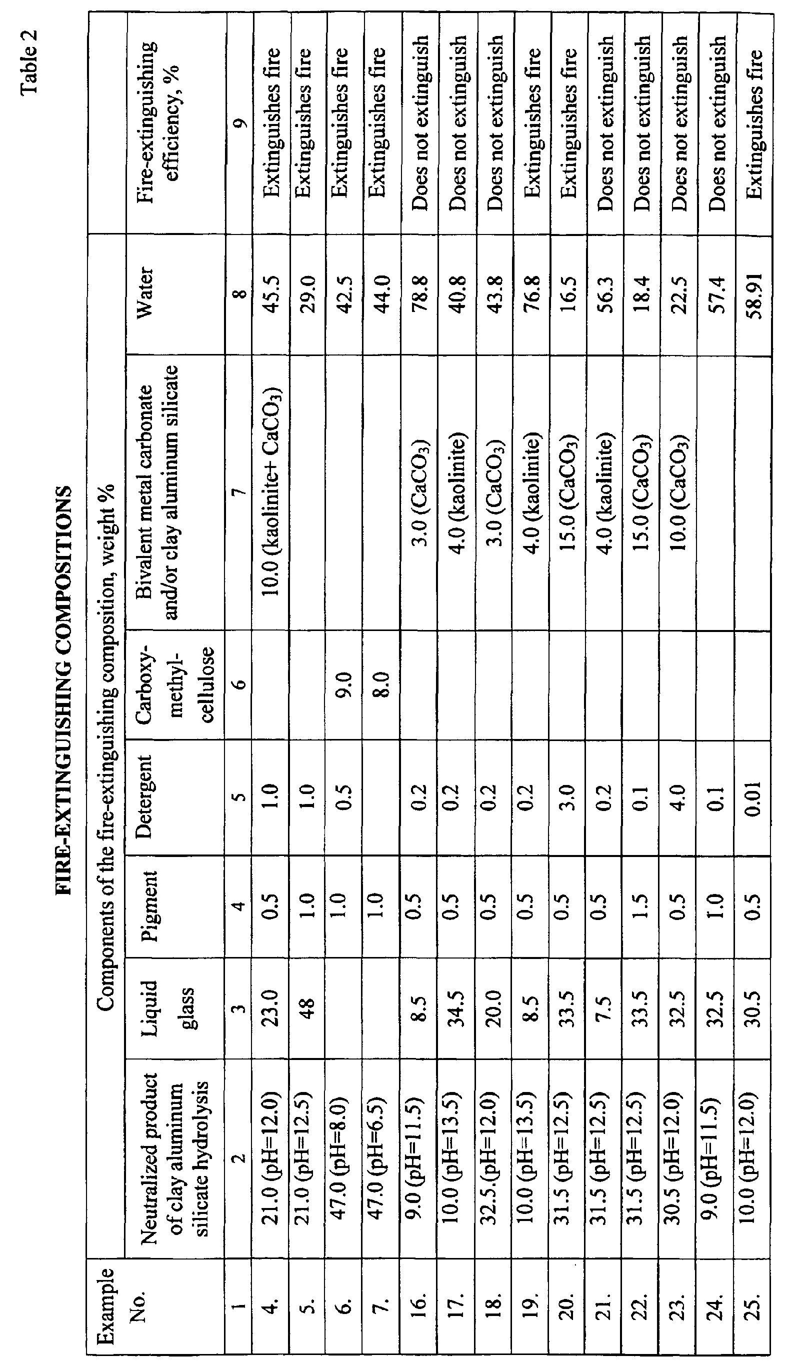

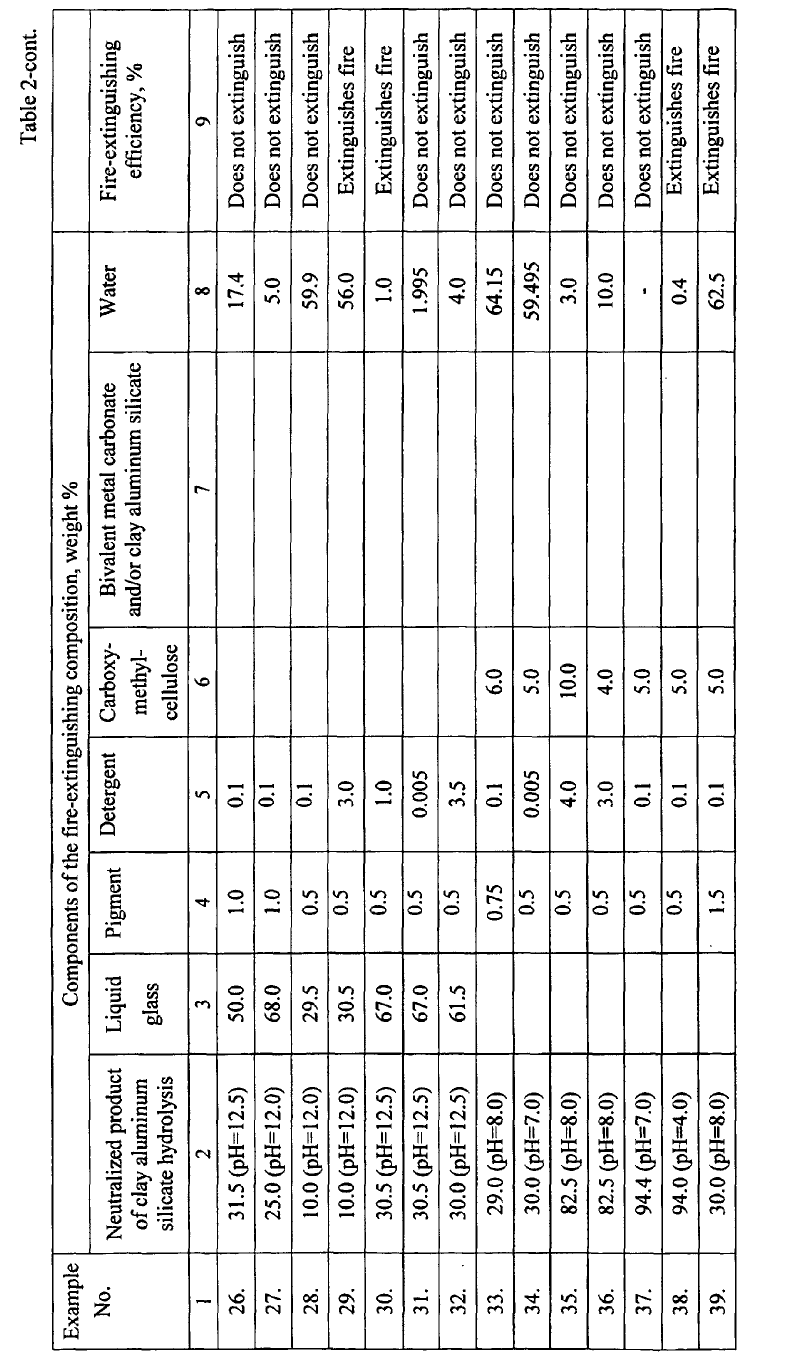

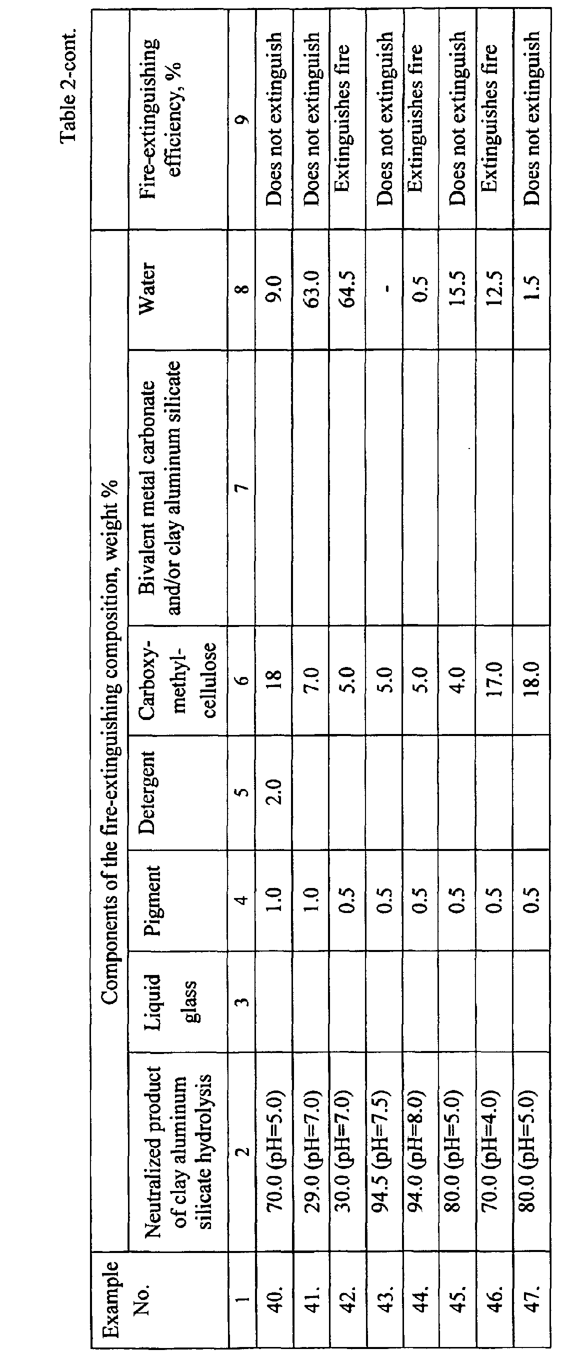

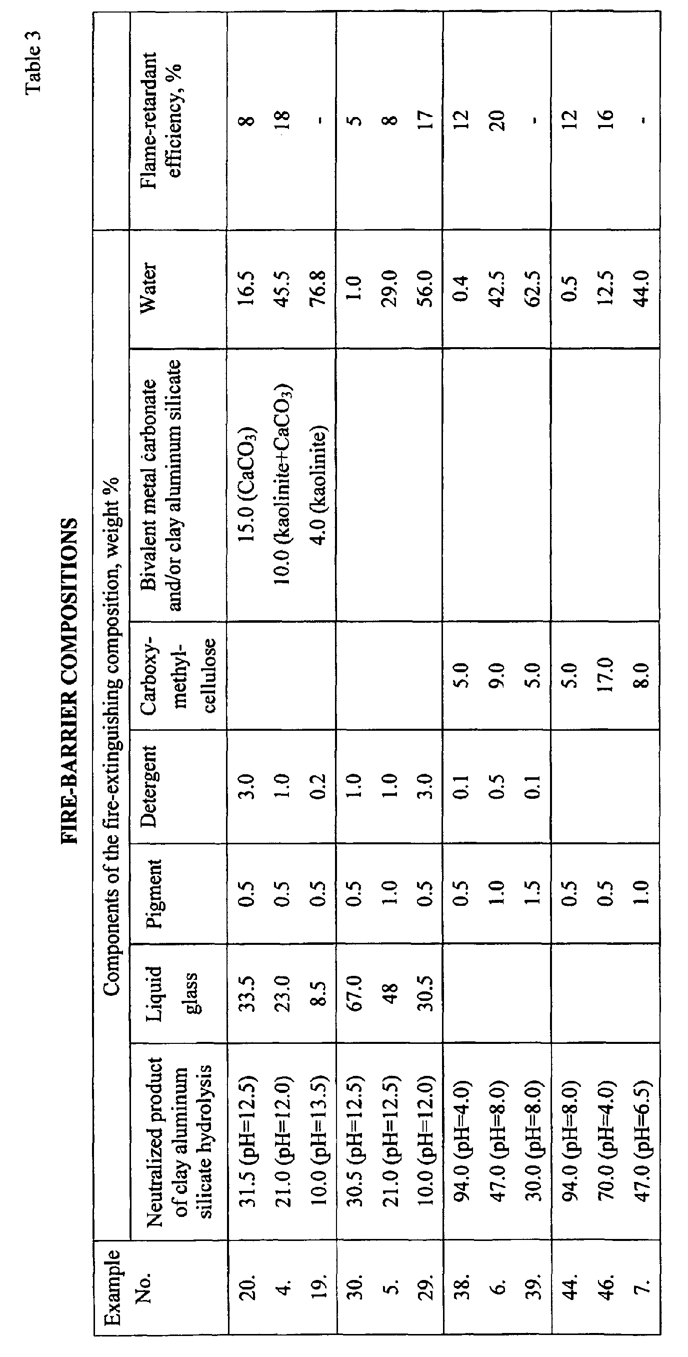

## Claims

1. A composition of the flame-retardant coating, containing liquid glass, a bivalent metal carbonate, a mineral additive and a pigment distinct in that,it contains, in addition, the neutralysate of the product of acid hydrolysis of aluminum silicate and, as a mineral additive, clay aluminum silicate with the weight percentage ratio of the said components being:
- neutralysate of the acid hydrolysis of clay aluminum silicate 30.0÷42.0
- pigment 0.50÷1.0
- liquid glass 26.0÷45.0
- bivalent metal carbonate and/or clay aluminum silicate balance.

2. A composition of the flame-retardant coating containing the neutralysate of the product of acid hydrolysis of clay aluminum silicate and liquid glass, distinct in that, it contains the neutralysate of the product of acid hydrolysis of clay aluminum silicate and liquid glass with the weight percentage ratio of the said components being:
- neutralysate of the acid hydrolysis of clay aluminum silicate 30.0÷47.0
- liquid glass 53.0÷70.0

3. A composition of the flame-retardant coating, containing the neutralysate of the product of acid hydrolysis of clay aluminum silicate, liquid glass and a pigment, distinct in that, it contains the neutralysate of the product of acid hydrolysis of clay aluminum silicate, liquid glass and a pigment with the weight percentage ratio of the said components being:
- neutralysate of the acid hydrolysis of clay aluminum silicate 30.0÷45.0
- liquid glass 53.0÷68.0
- pigment 0.01÷2.0

4. A composition for fire-extinguishing and fire barriers containing the neutralysate of the product of acid hydrolysis of clay aluminum silicate, a bivalent metal carbonate and/or clay aluminum silicate, liquid glass and a pigment, distinct in that,it contains, in addition, a detergent and water with the weight percentage ratio of the said components being:
- neutralysate of the acid hydrolysis of clay aluminum silicate 10.0÷31.5
- liquid glass 8.5÷33.5
- pigment 0.5÷1.5
- bivalent metal carbonate and/or clay aluminum silicate 4.0÷15.0
- detergent 0.2÷3.0
- water balance.

5. A composition for fire-extinguishing and fire barriers containing the neutralysate of the product of acid hydrolysis of clay aluminum silicate, liquid glass and a pigment, distinct in that, it contains, in addition, a detergent and water with the weight percentage ratio of the said components being:
- neutralysate of the acid hydrolysis of clay aluminum silicate 10.0÷30.5
- liquid glass 30.5÷67.0
- pigment 0.5÷1.5
- detergent 0.01÷3.0
- water balance.

6. A composition for fire-extinguishing and fire barriers containing the neutralysate of the product of acid hydrolysis of clay aluminum silicate and a pigment, distinct in that,it contains, in addition, a sodium salt of carboxymethylcellulose, a detergent and water with the weight percentage ratio of the said components being:
- neutralysate of the acid hydrolysis of clay aluminum silicate 30.0÷94.0
- pigment 0.5÷1.5
- sodium salt of carboxymethylcellulose 5.0÷17.0
- detergent 0.01÷3.0
- water balance.

7. A composition for fire-extinguishing and fire barriers, containing the neutralysate of the product of acid hydrolysis of clay aluminum silicate and a pigment, distinct in that, it contains, in addition, a sodium salt of carboxymethylcellulose and water with the weight percentage ratio of the said components being:
- neutralysate of the acid hydrolysis of clay aluminum silicate 30.0÷94.0
- pigment 0.5÷1.5
- sodium salt of carboxymethylcellulose 5.0÷17.0
- water balance.
